# EUROPÄISCHE PATENTANMELDUNG

(11) **EP 0 849 297 A1**
(43) Veröffentlichungstag der Anmeldung: **24.06.1998**
(21) Anmeldenummer: 97121496.0
(22) Anmeldetag: 06.12.1997
(51) Int. Cl.: C08G 2/14, A01N 35/02

(54) **Acrolein freisetzende Emulsionshomopolymerisate**

(30) Priorität: 20.12.1996 DE 19653305
(71) Anmelder: DEGUSSA AG, 60311 Frankfurt (DE)
(72) Erfinder: Werle, Peter Dr., 63571 Gelnhausen (DE); Krimmer, Hans-Peter, Dr., 63128 Dietzenbach (DE); Trageser, Martin, 63571 Gelnhausen (DE)

(57) **Zusammenfassung**

Acrolein freisetzende Emulsionshomopolymerisate spalten in wäßrigen Systemen Acrolein ab. Sie werden hergestellt, indem man eine Alkalilauge vorlegt, Acrolein in einer Reinheit von mindestens 95 Gew.-% zugibt, während der Zugabe eine Temperatur von 25 °C nicht überschreitet und anschließend durch Zugabe von Mineralsäure einen pH-Wert von 5 bis 7 einstellt.

## Beschreibung

Die Erfindung betrifft Acrolein freisetzende Emulsionshomopolymerisate, das Verfahren zu ihrer Herstellung und ihre Verwendung als biocide Mittel.

Es ist bekannt, monomeres Acrolein (2-Propenal) als sehr effektives Biocid bei der Behandlung von Wasserkanälen einzusetzen, um unerwünschten Algen- und Pflanzenwuchs zu unterdrücken. Ebenfalls kann es zur Bekämpfung von sulfatreduzierenden Bakterien bei der Erdölexploration eingesetzt werden.

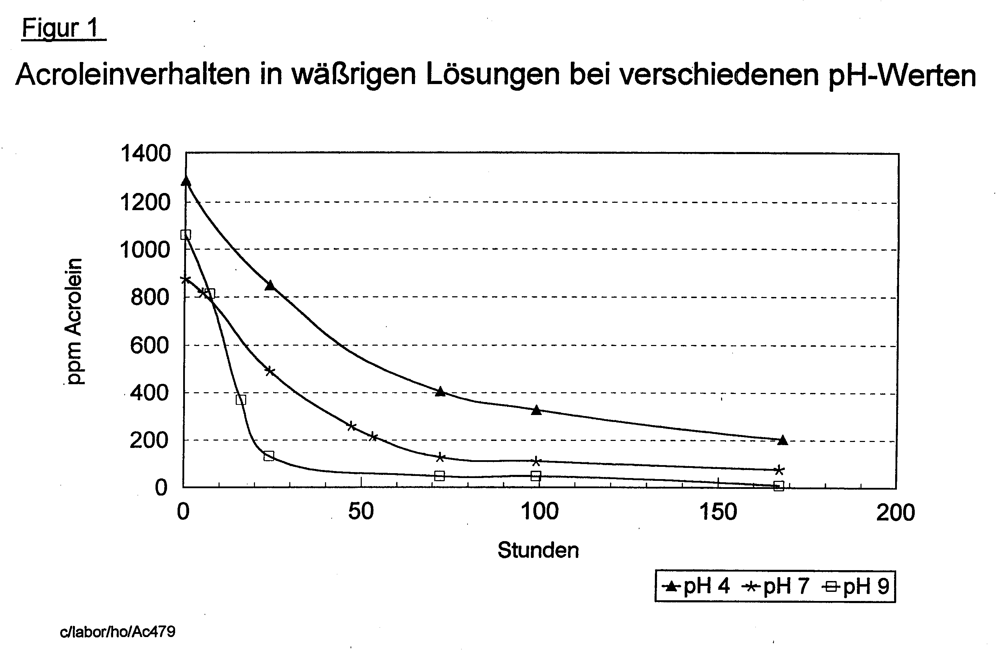

Weitere Anwendungsbereiche für die biocide Wirkung des monomeren Acroleins sind bisher aufgrund der hohen Reaktivität nicht erschlossen worden. So haben Untersuchungen ergeben, daß Acrolein in Abhängigkeit vom pH-Wert in wäßrigen Systemen raschen Veränderungen unterliegt, beispielsweise der Hydration oder Polymerisation (s. Figur 1). Daher ist es bislang auch nicht möglich gewesen, Acrolein als Konservierungsstoff mit langanhaltender Wirkung einzusetzen. Wegen seiner Neigung, bei unsachgemäßer Behandlung spontan und gegebenenfalls explosionsartig zu polymerisieren, kann es nur unter besonderen Sicherheitsmaßnahmen gehandhabt werden. Es hat eine starke Reizwirkung auf die Atmungsorgane und die Augen. Selbst in stabilisierter Form ist Acrolein nur begrenzt lagerfähig.

Es ist bekannt, Copolymere des Acroleins mit Formaldehyd, die durch Kondensation von Acrolein und Formaldehyd im molaren Verhältnis zwischen 1 : 1 und 1 : 10 in Gegenwart eines beasischen Katalysators hergestellt wurden, als Biocide für wäßrige Systeme einzusetzen (DE-B 32 05 484). Die bekannten Copolymere des Acroleins mit Formaldehyd haben den Nachteil, daß sie ca. 15 % freien, nicht umgesetzten Formaldehyd enthalten.

Es ist bekannt, Homopolymere des Acroleins als Biocide einzusetzen (EP-A 0 339 044). Die Polymerisation wird überwiegend radikalisch durchgeführt. Hierbei sollen die sich ausbildenden Polyaldehydstrukturen Träger der biociden Wirkung sein. Die radikalisch erzeugten Homopolymere des Acroleins sind nachteiligerweise in organischen Medien oder in Wasser nicht löslich und zeigen in Form einer wäßrigen Suspension nur eine sehr niedrige biologische Aktivität.

Die in der deutschen Patentanmeldung P 44 04 404 beschriebene Herstellung von Polyacroleinen ist problematisch, weil die Ausbeuten bei der Umsetzung des Acroleins mit NaOH im wäßrigen System nur 75 - 80 % an polymerem Material betragen. Es fallen also Mutterlauge und Waschwasser, die organische Stoffe enthalten und daher aufwendig entsorgt werden müssen, an. Eine Recyclierung ist wegen negativen Einflusses auf die Polymereigenschaften nicht möglich. Auch diese Polymere sind nahezu unlöslich in Wasser.

Bislang nicht beschrieben sind Acroleinpolymere oder Copolymere, die als Acroleindepotstoff dienen. Das unter geeigneten Bedingungen kontinuierlich in geringen Mengen freigesetzte monomere Acrolein sollte dabei als biocider Wirkstoff, der über lange Zeit aus dem Polymer oder Copolymer nachgebildet wird, wirken.

Acroleinemulsionspolymerisate an sich sind schon sehr lange bekannt. H. Cherdon et al. beschreiben in Makromolekulare Chem. 32, 197 (1959) die Herstellung von Emulsionspolymeren des Acroleins unter Verwendung von Polyacrolein-SO₂-Lösungen als Emulgator.

Margel und Wiesel publizieren die Herstellung analoger Produkte mit definierter Teilchengröße u.a. im Journal of Polymer Science, Polymer Chemistry Edition Vol. 22, 145 (1984) sowie in der US-P 4.783.336. Die Polymerisation erfolgt alkalisch mit Natriumhydroxid oder radikalisch mit Persulfat/Silber als Katalysator. Als Verwendung wird der Einsatz als Marker für Zellbestimmungen bzw. in der Transmission Elektronenspektroskopie angegeben.

Die europäische Patentanmeldung 0 441 468 A2 beschreibt die Verwendung von Mikropartikeln auf Basis von z.B. Polyaldehyden als Kontrastmittel.

Es bestand somit die Aufgabe, Acroleinhomopolymere, die eine gute biocide Wirksamkeit aufweisen und einfach zu handhaben sind, herzustellen.

Gegenstand der Erfindung sind Acrolein freisetzende Emulsionshomopolymerisate, welche dadurch gekennzeichnet sind, daß sie in wäßrigen Systemen bei einem pH-Wert von größer 7 Acrolein freisetzen und dadurch eine biocide Wirkung aufweisen.

Ein weiterer Gegenstand der Erfindung ist ein Verfahren zur Herstellung der Acrolein feisetzenden Emulsionshomopolymerisate, welches dadurch gekennzeichnet ist, daß man eine Lösung von wäßriger Alkalilauge, die gegebenenfalls einen Emulgator oder Netzmittel enthält, vorlegt, zu dieser Lösung Acrolein, bevorzugt mit einer Reinheit von mindestens 95 Gew.-%, zugibt, während der Zugabe des Acroleins in der Lösung eine Temperatur von maximal 25 °C einhält, gegebenenfalls nachrührt und anschließend durch Zugabe von wäßriger Mineralsäure neutralisiert, d.h. einen pH-Wert von 5 bis 7 einstellt.

Als Mineralsäure kann Salzsäure eingesetzt werden.

Als Alkalilauge kann Natronlauge eingesetzt werden.

Erfindungsgemäß wurde gefunden, daß Acroleinhomopolymeremulsionen, die erfindungsgemäß hergestellt werden, in wäßrigen Medien Acrolein in geringen Mengen und über einen langen Zeitraum abspalten und somit zur Konservierung einer Vielzahl technischer Produkte geeignet sind. Zur Herstellung stabiler, milchähnlicher Emulsionen werden vorzugsweise Natriumsulfobernsteinsäureester als Emulgatoren eingesetzt.

Die erfindungsgemäß hergestellten Acroleinhomopolymerisate können eine mittlere Teilchengröße von 450 bis 600 nm, bevorzugt ca. 500 nm, aufweisen.

Ein weiterer Gegenstand ist ein Verfahren zur Konservierung von Stoffen, welches dadurch gekennzeichnet ist, daß man die Emulsionshomopolymerisate als Acrolein freisetztende Verbindungen den Stoffen zusetzt.

Zum Beispiel können die folgenden Stoffe erfindungsgemäß konserviert werden:

Kunststoffdispersionen, Sanierungslösungen zur Bekämpfung auf Holz, Fassaden und Wänden, Wandanstriche, Farbstoffteige und Pasten, Dichtungsmassen, Leimfarben, Holzschutzlacke, Klebstoffemulsionen, Haut- und Lederleime, Knochenleime, Stärkeleime, Casein-Leime, Dextrin-Klebstoffe, Salzhäute, Pickellösungen, Trocknenhäute, Gerbbrühe, feuchtes Chromleder, Fertigleder, Spinnbäder, Wachsemulsionen, Waschrohstoffe, Textilausrüstung, Textilappreturen, Papier/Pappe, PVC- und Schneideöle (konserviert), Holzkonservierung, Cellulosefaser (Verrottungsschutz), Verfugungszement, Schiffsfarbe, flüssige Reinigungsmittel.

Die erfindungsgemäßen Acroleinpolymere können dabei in Mengen von 0,005 - 0,3 % den Stoffen zugesetzt werden.

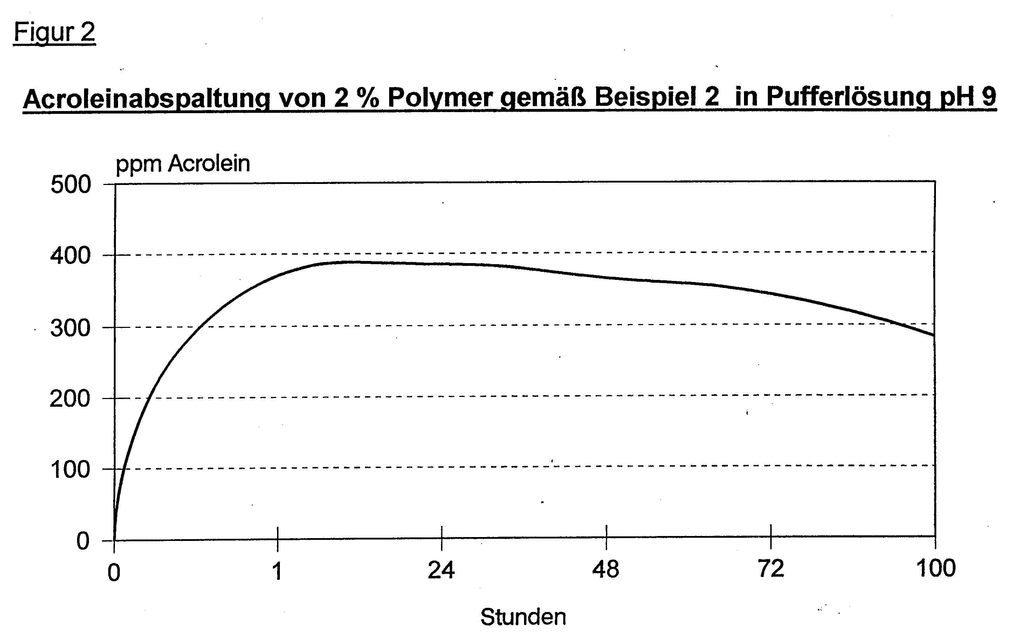

Da diese Emulsionspolymerisate in Wasser nur sehr wenig löslich sind, sind sie als rasch wirksame Desinfektionsmittel an sich nicht brauchbar. Durch den vor allem bei höheren pH-Werten eintretenden Effekt der langsamen, kontinuierlichen Acroleinfreisetzung ist jedoch eine hervorragende Konservierwirkung gegeben. Figur 2 zeigt die Acroleinfreisetzung in Pufferlösungen bei pH 9. Dieser Befund ist überraschend und nicht vorhersehbar, da die Literatur lehrt, daß Acrolein bei diesen pH-Werten der spontanen Polymerisation unterliegt, eine Freisetzung von monomerem Acrolein also nicht zu erwarten ist.

### Beispiele

### Beispiel 1

270 ml Wasser, 1,2 ml 1 N Natronlauge und 0,3 ml Emulgator (Rewopol SDB 075) werden bei Raumtemperatur vorgelegt und innerhalb von 1 Std. unter Kühlung bei einer Reaktionstemperatur von 5 - 15 °C 36 ml Acrolein ca. 95 %ig zugetropft. Anschließend wird noch 1 Std. bei Raumtemperatur nachgerüht und durch Zugabe von 1,2 ml 1 N Salzsäure neutralisiert.

Ausbeute: ca. 300 g 10 %ige Acroleinpolymer-Emulsion mit einer Teilchengröße von d₅₀ ca. 500 nm.

### Beispiel 2

1,80 l Wasser, 12 ml 1 N Natronlauge und 12 ml Rewopol SBD 075 werden vorgelegt und unter Solekühlung bei einer Reaktionstemperatur von 5 - 20 °C 1,44 l Acrolein ca. 95 %ig zudosiert. Es wird 1 Std. bei Raumtemperatur nachgerührt und mit 12 ml 1 N Salzsäure neutralisiert.

Ausbeute: ca. 3,0 kg 40 %ige Acroleinpolymer-Emulsion.

Die Wirksamkeit der erfindungsgemäßen Emulsionshomopolymerisate als Mittel zur Konservierung kann überzeugend in einem Konservierungsbelastungstest nachgewiesen werden.

### Konservierungsbelastungstest:

In 100 ml Polyethylenbecher werden 50 g einer nicht konservierten frisch zubereiteten Dispersionsfarbe gegeben. Danach werden die zu prüfenden Substanzen eingewogen und homogen verteilt. Als Kontrolle dient ein unkonserviertes Farbenmuster.

Die Probebecher werden während der Restzeit bei 25 °C und 65 % rel. Luftfeuchte in einem Kühlbrutschrank gelagert. Drei Tage nach Zusatz der Konservierungsmittel werden die Proben mit 0,5 ml eines Keimgemisches, bestehend aus etwa gleichen Teilen Alcaligenes denitrificans, E.-coli, Klebsiella pneumoniae, Proteus mirabilis, Proteus vulgaris, Pseudomonas aeruginosa, Pseudomonas putida, Serratia marcescens, Staphylococcus aureus, beimpft und mit einem Spatel eingerührt. Die Beimpfung wird in wöchtenlichem Abstand insgesamt siebenmal durchgeführt. Nach guter Durchmischung der Probebecher werden nach 3 bzw. 7 Tagen Ausstriche aus CASO-Agar angefertigt. Die Ablesung der Ausstriche erfolgt nach dreitägiger Inkubation bei 25 bis 30 °C im Brutschrank. Negative Ausstriche werden sicherheitshalber weitere zwei Tage beobachtet und nochmals beurteilt.

Der Bewuchs wird nach folgenden Schema beurteilt:
- 0: keine Bakterien
- 0 - 1: bis zu 10 Bakterien/KBE
- 1: bis zu 30 Bakterien/KBE
- 2: bis zu 100 Bakterien/KBE
- 3: bis zu 250 Bakterien/KBE
- 3 - 4: bis zu 500 Bakterien/KBE
- 4: bis zu 1000 Bakterien/KBE
- 5: Ausstrich zu 85 % bewachsen
- 6: Ausstrich zu 100 % bewachsen, dichter Rasen
KBE = Keimbildende Einheiten

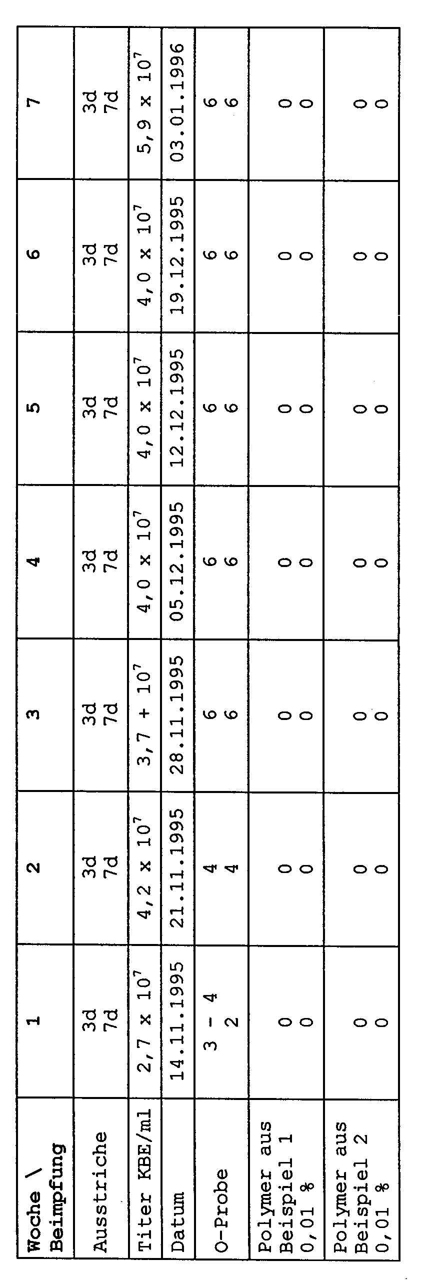

### Acrolein-Abspaltung von Produkt gemäß Beispiel 2 in Pufferlösung bei pH 9

### Verwendete Lösungen:

### Beispiel 2: 2 % Polymer in Pufferlösung pH 9 der Fa. Merck

### Meßwert-Tabelle

| **Verweilzeit [h]** | **Freigesetztes Acrolein [ppm] Beispiel 2** |
|---|---|
| 0 | 0 |
| 1 | 370 |
| 24 | 385 |
| 48 | 365 |
| 72 | 342 |
| 100 | 284 |

Diese Werte sind in der Figur 2 graphisch dargestellt.

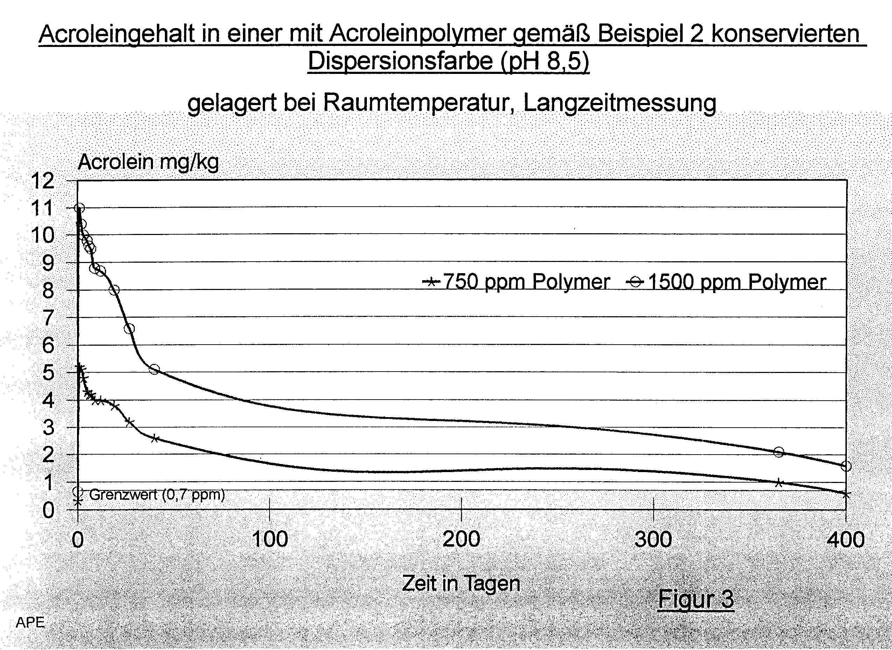

Bei der Konservierung einer Dispersionsfarbe mit 750 bzw. 1500 ppm eines gemäß Beispiel 2 hergestellten Emulsionspolymerisats über einen Zeitraum von einem Jahr läßt sich der Gehalt an freiem Acrolein nach Abtrennung der Farbmatrix mittels HPLC in dem Farbserum nachweisen. Der Gehalt liegt über einem sehr langen Zeitraum im Bereich von 1 - 2 ppm (s. Figur 3). Parallel dazu durchgeführte, oben beschriebene Konservierungsbelastungstests ergaben vollständige Abtötung der zugesetzten Keime, solange der Gehalt an freiem Acrolein über etwa 0,7 ppm liegt. Im Falle der Konservierung mit 750 ppm Homopolymer stellt man nach mehr als 360 Tagen ein Absinken der biologischen Aktivität fest, korreliert mit einem freien Acroleingehalt von 0,7 ≤ ppm.

Hieraus ergibt sich der nicht vorhersehbare und überraschende Schluß, daß Acrolein, wenn es aus einer Quelle permanent nachgeliefert wird, in der Lage ist, im unteren ppm-Bereich Bakterienkulturen wirkungsvoll zu bekämpfen. Eine derartige hohe Aktivität ist dem Acrolein bislang nicht zugeschrieben, da sich nur einmal zugesetztes Produkt rasch aufzehrt (Wasseraddition, Dimerbildung), so daß es schon nach wenigen Stunden inaktiviert wird. Die konstante Aufrechterhaltung einer Konzentration von 1- 2 ppm freiem Acrolein durch die Zugabe des erfindungsgemäßen Polymers führt hingegen zu einer langfristigen Konservierung.

## Patentansprüche

1. Acrolein freisetzende Emulsionshomopolymerisate, dadurch gekennzeichnet, daß sie in wäßrigen Systemen bei einem pH-Wert von größer 7 Acrolein freisetzen und dadurch eine biocide Wirkung aufweisen.

2. Verfahren zur Herstellung der Acrolein freisetzenden Emulsionshomopolymerisate gemäß Anspruch 1, dadurch gekennzeichnet, daß man eine Lösung von wäßriger Alkalilauge, die gegebenenfalls einen Emulgator oder Netzmittel enthält, vorlegt, zu dieser Lösung Acrolein, bevorzugt in einer Reinheit von mindestens 95 Gew.-% zugibt, während der Zugabe des Acroleins in der Lösung eine Temperatur von maximal 25 °C einhält, gegebenenfalls nachrührt und anschließend durch Zugabe von wäßriger Mineralsäure neutralisiert, d.h. einem pH-Wert von 5 bis 7 einstellt.

3. Verfahren zum Konservieren von Stoffen, dadurch gekennzeichnet, daß man die Emulsionshomopolymerisate gemäß Anspruch 1 als Acrolein freisetzende Verbindungen den zu konservierenden Stoffen zusetzt.
